# EUROPÄISCHE PATENTSCHRIFT

(11) **EP 4 067 931 B1**
(45) Veröffentlichungstag und Bekanntmachung des Hinweises auf die Patenterteilung: **13.12.2023**
(21) Anmeldenummer: 22158802.3
(22) Anmeldetag: 25.02.2022
(51) Int. Cl.: G01S 7/481, G01S 17/48

(54) **OPTOELEKTRONISCHER SENSOR UND VERFAHREN ZUR ERFASSUNG EINES OBJEKTS**
OPTOELECTRONIC SENSOR AND METHOD FOR DETECTING AN OBJECT
CAPTEUR OPTOÉLECTRONIQUE ET PROCÉDÉ DE DÉTECTION D'UN OBJET

(30) Priorität: 30.03.2021 DE 102021108096
(43) Veröffentlichungstag der Anmeldung: 05.10.2022
(73) Patentinhaber: SICK AG, 79183 Waldkirch (DE)
(72) Erfinder: Eble, Johannes, 79183 Waldkirch (DE); Albrecht, Roland, 79312 Emmendingen (DE)

(56) Entgegenhaltungen:
- DE-A1-102006 019 124
- DE-A1-102018 129 972
- US-B1- 6 344 893

## Beschreibung

Die Erfindung betrifft einen optoelektronischen Sensor zur Erfassung eines Objekts nach dem Prinzip der Triangulation gemäß dem Oberbegriff von Anspruch 1.

Das Prinzip der optischen Triangulation beruht darauf, einen Lichtsender und einen ortsauflösenden Lichtempfänger um einen bekannten Basisabstand gegeneinander versetzt anzuordnen. Sende- und Empfangslichtstrahl stehen dann in einem Winkel zueinander, was dazu führt, dass sich der Empfangslichtfleck auf dem Empfänger in Abhängigkeit von dem Abstand zu dem angetasteten Objekt entlang einer Triangulationsrichtung bewegt. Die Position des Empfangslichtflecks auf dem ortsauflösenden Lichtempfänger ist demnach ein Maß für den Objektabstand.

Die erzielbare Reichweite sowie die Genauigkeit der Abstandsmessung hängen von der Art des Lichtempfängers und Parametern wie Sendeleistung auch unter Berücksichtigung von Augenschutz, Baugröße des Sensors und damit Größe und Brennweite der Empfangslinse sowie dem Basisabstand ab. Der gemessene Abstand kann unmittelbar die Ausgabegröße des Sensors sein. Es gibt aber auch schaltende Systeme, die ein Objekt nur dann erfassen, wenn es sich in einem bestimmten Abstandsbereich befindet. Zu diesen Sensoren gehören die hintergrundausblendenden Lichttaster. Sie sind schaltend, geben also lediglich ein binäres Objektfeststellungsignal aus.

Triangulationssensoren mit einer guten Entfernungsauflösung benötigen Empfangslinsen mit langen Brennweiten. Häufig ist jedoch der für den Sensor zur Verfügung stehende Bauraum insbesondere in seiner Tiefe begrenzt.

Die DE 10 2007 004 632 A1 schlägt einen Triangulationssensor vor, bei dem die Empfangslinse durch ein Array von Einzelabbildungselementen ersetzt ist, welches ein einer Mehrzahl von zueinander beabstandeten Abbildungen des Lichtflecks entsprechendes Empfangssignalmuster auf dem ortsauflösenden Lichtempfänger erzeugt, wobei der Triangulationssensor die Information über den Objektabstand aus dem Empfangssignalmuster bestimmt. Jedoch muss bei diesem Verfahren zum einen der Lichtempfänger im Vergleich zu einem herkömmlichen Triangulationstaster eine höhere räumliche Auflösung aufweisen, zum anderen ist die Signalauswertung aufwändiger, da statt einem Lichtfleck ein Empfangssignalmuster ausgewertet werden muss, das mehrere Lichtflecken aufweist.

In der WO 2005 069 607 A1 ist ein Bilderfassungsgerät mit geringer Bautiefe offenbart, wobei dem Bildsensor ein Mikrolinsenarray vorgeordnet ist. Zwischen Mikrolinsenarray und Bildsensor kann ein Blendenarray angeordnet sein, um das Auflösungsvermögen der Anordnung zu erhöhen.

Die DE 10 2006 019 124 A1 beschreibt ein Bilderfassungssystem zur Rundumsicht, das mindestens eine Kameraeinheit enthält, die aus zeilenförmig angeordneten optischen Kanälen mit einer Mikrolinse und einem in dessen Brennebene liegenden Detektor, der aus dem Mikrobild hinter der Mikrolinse einen Bildpunkt extrahiert, besteht. Die optischen Achsen der einzelnen optischen Kanäle weisen unterschiedliche Neigungen auf, wodurch sie eine Funktion des Abstandes des optischen Kanals vom Mittelpunkt der zugewandten Seite der Kameraeinheit darstellen, womit das Verhältnis der Größe des Gesichtsfeldes zur Bildfeldgröße gezielt bestimmbar ist. Die mindestens eine Kameraeinheit ist auf einer rotierenden oder rotationsschwingenden Drehachse montiert, wodurch eine Rundumsicht des Bilderfassungssystems ermöglicht wird

Aus der US 6 344 893 B1 ist ein hochauflösendes Abbildungsgerät zur Abstandsschätzung eines Objekts innerhalb eines Sichtfelds bekannt, bei dem diffraktive optische Elemente auf einer Abbildungslinse angebracht sind. Die Verwendung der diffraktiven optischen Elemente in Verbindung mit einer modifizierten Scheimpflug-Anordnung ermöglicht die Umwandlung eines Freiheitsgrads in einer Achse eines Sichtfelds in einen größeren Freiheitsgrad in einer anderen Achse, womit ein hochauflösendes Bild des Objekts mit großer Schärfentiefe und großem Sichtfeld erzeugt werden kann. Von den diffraktiven optischen Elementen erzeugte Replikate des Bildes sind um Subpixel-Beträge gegeneinander verschoben und werden unter Verwendung einer Gabor-Transformation kombiniert, was durch eine räumliche Maske über der Detektoranordnung erleichtert wird.

Es ist Aufgabe der Erfindung, einen optischen Sensor nach dem Prinzip der Triangulation anzugeben, der eine geringe Bautiefe aufweist und eine einfache Datenerfassung ermöglicht.

Diese Aufgabe wird durch einen optoelektronischen Sensor zur Erfassung eines Objekts nach dem Prinzip der Triangulation gemäß Anspruch 1 gelöst. Dazu wird wie bei der optischen Triangulation üblich, ein Sendelichtbündel von einer Lichtquelle über eine Sendeoptik entlang einer Sendelichtachse in einen Überwachungsbereich ausgesandt. Lichtquelle und Sendeoptik in Gesamtheit werden im Folgenden auch als Lichtsender bezeichnet. Ein von einem Objekt im Überwachungsbereich remittiertes und/oder reflektiertes Empfangslichtbündel erzeugt einen Empfangslichtfleck auf einem ortsauflösenden Lichtempfänger und wird von diesem registriert. Das Empfangslichtbündel kann sowohl durch diffuse Remission als auch durch gerichtete Reflexion des Sendelichtbündels entstehen. Der Lichtsender und der Lichtempfänger sind in einer Triangulationsrichtung um einen Basisabstand zueinander versetzt angeordnet. Die Triangulationsrichtung ist dabei durch die Richtung festgelegt, in der sich der Empfangslichtfleck, den das Empfangslichtbündel auf dem Lichtempfänger erzeugt, bewegt, wenn sich das Objekt auf den Sensor zu- oder vom Sensor wegbewegt.

Der Sensor weist weiterhin ein Mikrolinsenraster auf, das eine Vielzahl von Mikrolinsen umfasst und dem ortsauflösenden Lichtempfänger vorgeordnet ist, also zwischen Lichtempfänger und Objekt angeordnet ist. Das vom Objekt im Überwachungsbereich remittierte und/oder reflektierte Empfangslichtbündel wird durch das Mikrolinsenraster in einen Bereich des Lichtempfängers fokussiert. Die Mikrolinsen des Mikrolinsenrasters weisen Mikrolinsendurchmesser auf, wobei die Form der Mikrolinsen je nach Geometrie des Mikrolinsenrasters auch von einer Kreisform abweichen kann, beispielsweise hexagonal oder rechteckig, insbesondere quadratisch, sein kann. Als Mikrolinsendurchmesser soll dann im Sinne dieser Anmeldung der Durchmesser eines Kreises zu verstehen sein, der die Form der Mikrolinsen bestmöglich approximiert.

Die Mikrolinsendurchmesser können im Bereich von 5µm bis 200µm liegen, bevorzugt im Bereich von 20-40µm. Die Brennweiten der Mikrolinsen liegen im Bereich von 5µm bis 800µm, bevorzugt im Bereich vom 40-100µm, wobei die Brennweiten der Mikrolinsen abhängig von den Mikrolinsendurchmessern sind. Eine Mikrolinse mit einem Durchmesser von 30µm kann beispielsweise eine Brennweite zwischen 40µm und 100µm aufweisen, eine Mikrolinse mit einem Durchmesser von 5µm eine Brennweite von zwischen 7µm und 20µm, oder eine Mikrolinse mit einem Durchmesser von 200µm eine Brennweite von zwischen 250µm und 800µm.

Der Lichtempfänger weist eine Vielzahl von Empfangselementen auf, wobei die Empfangselemente sowohl als einzelne als auch als Gruppen von lichtempfindlichen Bereichen (Pixeln) des Lichtempfängers ausgebildet sein können. Die Empfangselemente können in einem eindimensionalen Raster angeordnet sein, das sich entlang der Triangulationsrichtung erstreckt, oder in einem zweidimensionalen Raster, das sich entlang der Triangulationsrichtung und senkrecht dazu erstreckt.

Die Erfindung geht nun von dem Grundgedanken aus, dass zwischen dem Mikrolinsenraster und dem Lichtempfänger im Fokusbereich des Mikrolinsenrasters ein eine Vielzahl von Lochblenden umfassendes Blendenraster angeordnet ist, durch die ein Empfangslichtbündel auf den Lichtempfänger gelangen kann. Jeder Mikrolinse des Mikrolinsenrasters ist dabei eine Lochblende des Blendenrasters zugeordnet, so dass jeweils eine Mikrolinse und eine Lochblende ein Mikrolinsen-Lochblenden-Paar bilden.

Die Lochblenden weisen Lochblendendurchmesser auf, wobei analog zu den Mikrolinsen die Form der Lochblenden von einer Kreisform abweichen kann, als Lochblendendurchmesser soll dann im Sinne dieser Anmeldung der Durchmesser eines Kreises zu verstehen sein, der die Form der Lochblende bestmöglich approximiert. Der Lochblendendurchmesser ist kleiner als der Mikrolinsendurchmesser der zugeordneten Mikrolinse und kann beispielsweise bei Verwendung einer Mikrolinse mit 100µm Brennweite im Bereich von 2µm bis 20µm liegen. Durch jede Lochblende und die ihr zugeordnete Mikrolinse wird ein Sichtbereich im Überwachungsbereich erzeugt, dessen Öffnungswinkel durch die Brennweite der Mikrolinse und den Durchmesser der Lochblende definiert ist.

Die Lochblenden weisen zudem zu den ihnen zugeordneten Mikrolinsen einen Versatz in Triangulationsrichtung auf. Der Versatz von Lochblende zu Mikrolinse entlang der Triangulationsrichtung führt dazu, dass durch die Mikrolinsenmittelpunkte und Lochblendenmittelpunkte definierte Geraden unterschiedliche Winkel zur Sendelichtachse aufweisen. Die Sichtbereiche der Mikrolinsen-Lochblenden-Paare "schauen" somit auf unterschiedliche Bereiche entlang der Sendelichtachse, wobei die Sichtbereiche auch teilweise überlappen können. Rein beispielhaft sind Sichtbereiche von Mikrolinsen-Lochblenden-Paaren mit geringem (oder gar keinem) Versatz auf einen Fernbereich des Sensors ausgerichtet, schneiden die Sendelichtachse des Sensors also in größerer Entfernung vom Sensor als Sichtbereiche von Mikrolinsen-Lochblenden-Paaren mit größerem Versatz.

Die erfindungsgemäße Anordnung hat den Vorteil einer geringeren Bautiefe im Vergleich zu einem herkömmlichen Triangulationstaster mit einer einzigen Empfangslinse bei gleicher Auflösung der Abstandsmessung. Zudem wird auf dem Lichtempfänger ein Empfangssignalmuster erzeugt, das dem eines Triangulationstasters mit einer einzigen Empfangslinse ähnelt. Die Notwendigkeit einer komplizierten Signalauswertung, die beispielsweise die Zuordnung der Empfangslichtflecken zur jeweiligen abbildenden Mikrolinse umfasst, entfällt daher.

Der Versatz der Lochblenden zu ihnen zugeordneten Mikrolinsen entlang der Triangulationsrichtung ist bevorzugt eine Funktion eines Abstandes der Mikrolinsen vom Lichtsender, wobei die Funktion linear oder nichtlinear sein kann. Vorteilhaft ist bei geringen Versätzen, bei denen die Sichtbereiche der Mikrolinsen-Lochblenden-Paare auf einen Fernbereich des Sensors ausgerichtet sind, auch die Änderung des Versatzes kleiner. Damit kann ein Abstand des Objekts im Fernbereich des Sensors feiner aufgelöst werden.

In einer Ausführungsform der Erfindung nimmt der Versatz von Lochblende zu Mikrolinse entlang der Triangulationsrichtung mit zunehmendem Abstand der Mikrolinsen vom Lichtsender ab. Dadurch sind Sichtbereiche der Mikrolinsen-Lochblenden-Paare, die näher an der Sendeoptik angeordnet sind, auf einen Nahbereich des Sensors ausgerichtet, die Sichtbereiche der weiter von der Sendeoptik entfernten Mikrolinsen-Lochblenden-Paare auf den Fernbereich.

In einer weiteren Ausführungsform der Erfindung nimmt der Versatz von Lochblende zu Mikrolinse entlang der Triangulationsrichtung mit zunehmendem Abstand der Mikrolinsen von der Sendeoptik zu. Dadurch sind die Sichtbereiche der Mikrolinsen-Lochblenden-Paare, die näher an der Sendeoptik angeordnet sind, auf den Fernbereich des Sensors ausgerichtet, die Sichtbereiche der weiter von der Sendeoptik entfernten Mikrolinsen-Lochblenden-Paare auf den Nahbereich.

Der Lochblendendurchmesser kann eine Funktion des Versatzes von Lochblende zu Mikrolinse entlang derTriangulationsrichtung sein. Bevorzugt ist der Durchmesser bei großem Versatz größer als bei kleinem Versatz, so dass die Sichtbereiche der Mikrolinsen- Lochblenden-Paare im Fernbereich kleiner sind als im Nahbereich.

Die Brennweite der Mikrolinsen kann eine Funktion des Versatzes von Lochblende zu Mikrolinse entlang der Triangulationsrichtung sein. Bevorzugt ist die Brennweite bei kleinem Versatz größer als bei großem Versatz. Bei Ausrichtung der Sichtbereiche der Mikrolinsen-Lochblenden-Paare auf den Fernbereich ist die Brennweite der Mikrolinsen also länger als bei Ausrichtung auf den Nahbereich. Bevorzugt variiert die Brennweite der Mikrolinsen so, dass bei jedem Mikrolinsen-Lochblenden-Paar Licht aus seinem Sichtbereich scharf auf die Lochblende des Mikrolinsen-Lochblenden-Paares abgebildet wird.

In einer Ausführungsform der Erfindung können das Mikrolinsenraster und der Lichtempfänger so ausgerichtet sein, dass sie der Scheimpflug Regel entsprechen. Die Objektebene und die durch das Mikrolinsenraster und den Lichtempfänger definierten Ebenen schneiden sich dabei in einer Geraden. Das Mikrolinsenraster kann dabei als keilförmiges optisches Element ausgelegt sein, wobei eine erste Fläche des optischen Elements die Mikrolinsen umfasst, und eine gegenüberliegende, zur ersten Fläche geneigten zweite Fläche parallel zur durch den Lichtempfänger definierten Ebene ausgerichtet sein kann.

In einer weiteren Ausführungsform der Erfindung können einem Lichtsender zwei in Triangulationsrichtung gegenüberliegende Lichtempfänger zugeordnet sein, wobei die Mikrolinsen-Lochblenden-Paare der Lichtempfänger derart ausgebildet sind, dass ihre Sichtbereiche in Richtung der Sendelichtachse ausgerichtet sind. Dies hat Vorteile bei glänzenden Objekten, da auch bei gerichteter Reflexion reflektierte Sendelichtbündel auf wenigstens einen der Lichtempfänger gelangen kann.

Die Mikrolinsen-Lochblenden-Paare können in einer weiteren Ausführungsform derart ausgestaltet sein, dass sich die Änderung des Versatzes von Mikrolinse zu Lochblende in Triangulationsrichtung zyklisch wiederholt. Damit wiederholt sich das Empfangssignalmuster auf dem Lichtempfänger. Durch eine Mehrfachauswertung (logische Verknüpfungen der einzelnen Empfangssignalmuster) wird das Ausgabesignal robuster gegen störende Einflüsse wie beispielsweise Fremdlicht.

In einer Ausführungsform, in der die Empfangselemente in einem zweidimensionalen Raster angeordnet sind, kann sich der Versatz von Mikrolinsen zu Lochblende in Triangulationsrichtung ändern und die Lochblendendurchmesser senkrecht dazu. Aus dem dadurch entstehenden Empfangssignalmuster lassen sich Rückschlüsse auf die Größe des detektierten Objektes ziehen. Auch Fehlschaltungen, welche durch unvollständige Reflexion des Sendelichtbündels hervorgerufen werden können, können dadurch vermieden werden.

Das Blenderaster kann als separates Element zwischen dem Mikrolinsenraster und dem Lichtempfänger angeordnet sein. Alternativ kann das Blenderaster am Lichtempfänger vor den Empfangselementen des Lichtempfängers angeordnet sein. In einer bevorzugten Ausführungsform kann das Blendenraster an der dem Lichtempfänger zugewandten Seite des Mikrolinsenrasters angeordnet sein. Das Blendenraster kann dann beispielsweise lithographisch hergestellt werden, indem eine Photomaske (positiv oder negativ) auf der dem Lichtempfänger zugewandten Seite des Mikrolinsenrasters positioniert und orientiert wird. Lithographische Belichtungs- und Ätzschritte lassen Lacksäulen an den Positionen der späteren Blenden stehen. Die Beschichtung durch ein Metall oder andere nichttransparente Materialen erzeugt eine lichtblockierende Schicht. Durch Herauslösen der Lacksäulen entstehen die Lochblenden des Blendenrasters.

In einer alternativen Ausführungsform können die Lochblenden integraler Bestandteil des Lichtempfängers sein. Dies bedeutet, dass das Blendenraster kein separates Bauteil ist, sondern durch die Aperturen diskreter Empfangselemente gebildet wird, wobei die Aperturdurchmesser der Empfangselemente kleiner sind als die Durchmesser der Mikrolinsen.

Die Mikrolinsen und Lochblenden können in verschiedenen Rasterformen angeordnet sein. In einer Ausführungsform kann die Anordnung der Mikrolinsen und Lochblenden hexagonal sein, wodurch ein hoher Füllfaktor beim Mikrolinsenarray erreicht wird. In einer alternativen Ausführungsform können Mikrolinsen und Lochblenden rechteckig angeordnet sein.

In einer Ausführungsform können Mikrolinsen- und Blendenraster eindimensional ausgeführt sein, dies bedeutet, Mikrolinsen- und Blendenraster umfassen jeweils lediglich eine Reihe von Mikrolinsen und Lochblenden, die bevorzugt entlang der Triangulationsrichtung angeordnet sind.

Der Lichtempfänger kann sowohl als eindimensionale (1D) Empfangszeile (beispielsweise als CCD-Zeile oder eindimensionales Photodiodenarray) oder als zweidimensionale (2D) Empfangsmatrix (beispielsweise als CMOS-Matrix) mit einer Vielzahl von lichtempfindlichen Bereichen (Pixeln) ausgebildet sein. Zur Signalauswertung können Signale mehrerer Pixel zusammengefasst werden (sogenanntes Binning). Anstelle einer Empfangszeile oder einer Empfangsmatrix kann auch eine PSD (Position Sensitive Detector) oder eine Doppelphotodiode verwendet werden. Ein Schaltpunkt kann beispielswiese durch eine mechanische Verschiebung der Mikrolinsen-Lochblenden-Paare relativ zur PSD oder zur Doppelphotodiode in Triangulationsrichtung verändert werden.

Zwischen dem Lichtempfänger und dem Blendenraster kann ein Diffusor zur Glättung des Empfangssignalmusters auf dem Lichtempfänger angeordnet sein, so dass das Empfangssignalmuster besser ausgewertet werden kann.

Der Lichtsender kann vorteilhafterweise einen gefalteten Strahlengang aufweisen, wobei das Sendelichtbündel der Lichtquelle zunächst in einer Ebene emittiert wird, die senkrecht zu der Sendelichtachse liegt, entlang derer das Sendelichtbündel in den Überwachungsbereich ausgesendet wird. Eine Kollimation des Sendelichtbündels kann dann in dieser Ebene erfolgen, und der Platzbedarf des Lichtsenders senkrecht dazu und somit die Bautiefe des Sensors minimiert werden. Die Ablenkung des Sendelichtbündels auf die Sendelichtachse, entlang derer das Sendelichtbündel in den Überwachungsbereich ausgesendet wird, kann beispielsweise über einen Umlenkspiegel oder ein Prisma erfolgen. Der Strahlengang kann auch mehrfach gefaltet sein. Beispielsweise kann die Lichtquelle das Sendelichtbündel zunächst in Richtung des Überwachungsbereichs emittieren. Mit einem ersten Umlenkelement erfolgt dann eine Ablenkung in die Ebene, die senkrecht zu der Sendelichtachse liegt, entlang derer das Sendelichtbündel in den Überwachungsbereich ausgesendet wird. Die Ablenkung in Richtung des Überwachungsbereichs erfolgt dann mit einem zweiten Umlenkelement. Mit solch einem zweifach gefalteten Strahlengang kann beispielsweise ein Aufbau realisiert werden, bei dem die Sendelichtquelle auf derselben Elektronikkarte wie der Lichtempfänger angeordnet ist. Durch den gefalteten Strahlengang lässt sich der Abstand zwischen Lichtsender und Lichtempfänger vergrößern. Die Umlenkelemente können zudem zur Strahlformung des Sendelichtstrahls ausgebildet sein (beispielsweise mit gekrümmten Spiegel- oder Prismenflächen) und zur Kollimation des Sendelichtbündels verwendet werden.

In einer Ausführungsform kann der Sensor mehrere Lichtsender umfassen, deren Sendelichtachsen in Triangulationsrichtung unterschiedliche Basisabstande zum Lichtempfänger aufweisen. Die Lichtsender können sequentiell aktiviert werden, womit der Sensor für verschiedene Objektabstände optimiert werden kann.

Der Sensor kann weiterhin eine Steuer- und Auswerteeinheit umfassen, die dazu eingerichtet sein kann, ein durch den Lichtempfänger erzeugtes Empfangssignalmuster auszuwerten. In einer ersten Ausführungsform kann eine (oder zwei) Schaltschwelle definiert werden, deren Überschreitung einen Schaltpunkt definiert. In einer alternativen Ausführungsform kann der Schaltpunkt ein Wendepunkt einer Flanke des Empfangssignalmusters sein. In einer weiteren Ausgestaltung kann der Schaltpunkt das Maximum des Empfangssignalmusters sein. Der tatsächliche Objektabstand kann mit dem Schaltpunkt aus dem Empfangssignalmuster für jeden Sensor in der Produktion oder bei Inbetriebnahme des Sensors eingelernt werden.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Figur 1: eine schematische Darstellung einer Ausführungsform eines erfindungsgemäßen Sensors
- Figur 2: eine schematische Darstellung einer Ausführungsform eines erfindungsgemäßen Sensors mit einem zweidimensionalen Lichtempfänger
- Figur 3: eine schematische Darstellung einer alternativen Ausführungsform eines erfindungsgemäßen Sensors mit einem zweidimensionalen Lichtempfänger mit integriertem Blendenraster
- Figur 4: eine schematische Darstellung einer Ausführungsform eines erfindungsgemäßen Sensors mit einem gemäß Scheimpflug Bedingung ausgerichtetem Mikrolinsenraster
- Figur 5: eine schematische Darstellung einer Ausführungsform eines erfindungsgemäßen Sensors mit zweifach gefaltetem Strahlengang
- Figur 6: ein beispielhaftes Empfangssignalmuster eines erfindungsgemäßen Sensors
- Figur7: eine schematische Darstellung einer Ausführungsform eines erfindungsgemäßen Sensors mit zwei Lichtempfängern

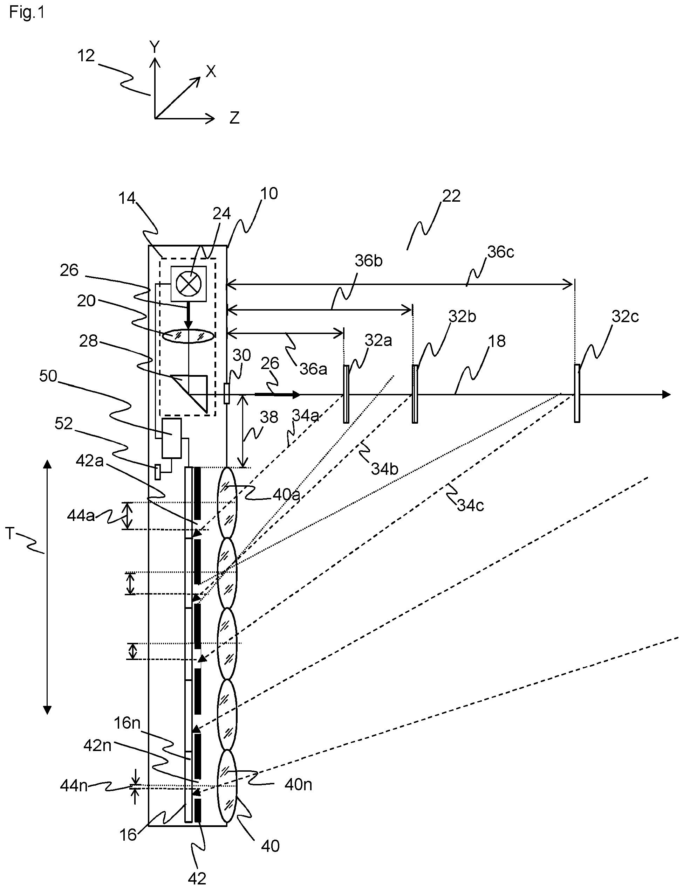

Figur 1 zeigt eine schematische Darstellung einer Ausführungsform eines erfindungsgemäßen Sensors 10
Eine Lichtquelle 24 eines Lichtsenders 14 emittiert ein Sendelichtbündel 26, das von einer Sendeoptik 20 und einem hier als Umlenkprisma dargestellten Umlenkelement 28 über ein Fenster 30 entlang einer Sendelichtachse 18 des Lichtsenders 14 in einen Überwachungsbereich 22 ausgesendet wird und beim Auftreffen auf Objekten 32a, 32b, 32c im Überwachungsbereich 22 Lichtflecken erzeugt. Das Sendelichtbündel 26 wird von den Objekten 32a, 32b, 32c remittiert und/oder reflektiert. So entstehende Empfangslichtbündel 34a, 34b, 34c erzeugen Empfangslichtflecke auf einem Lichtempfänger 16 und werden von diesem registriert. Der Lichtempfänger 16 umfasst eine Vielzahl von Empfangselementen 16a, 16n. Die Empfangslichtbündel 34a, 34b, 34c können sowohl durch diffuse Remission als auch durch gerichtete Reflexion des Sendelichtbündels 26 entstehen. Die Sendelichtachse 18 und der Lichtempfänger 16 sind in Triangulationsrichtung T um einen Basisabstand 38 zueinander versetzt angeordnet. Die Triangulationsrichtung T ist dabei durch die Richtung festgelegt, in der sich die Empfangslichtflecken, die die Empfangslichtbündel 34a, 34b, 34c auf dem Lichtempfänger 16 erzeugen, bewegen, wenn sich die Objekte 32a, 32b, 32c auf den Sensor 10 zu- oder vom Sensor 10 wegbewegen. Die Position eines Empfangslichtflecks auf dem Lichtempfänger 16 ist also von dem auch als Tastweite bezeichneten Abstand 36a, 36b, 36c der Objekte 32a, 32b, 32c vom Sensor 10 abhängig, und deshalb kann der Objektabstand 36a, 36b, 36c trianguliert werden.

Der Sensor 10 weist weiterhin ein Mikrolinsenraster 40 auf, das eine Vielzahl von Mikrolinsen 40a, 40n umfasst und dem ortsauflösenden Lichtempfänger 16 vorgeordnet, also zwischen dem Lichtempfänger 16 und den Objekten 32a, 32b, 32c im Überwachungsbereich 22 angeordnet ist. Die Empfangslichtbündel 34a, 34b, 34c werden durch das Mikrolinsenraster 40 in einen Bereich des Lichtempfängers 16 fokussiert.

Im lichtempfängerseitigen Fokusbereich des Mikrolinsenrasters 40 ist ein Blendenraster 42 angeordnet, das eine Vielzahl von Lochblenden 42a, 42n umfasst. Jeder Lochblende 42a, 42n des Lichtempfängers 16 ist eine Mikrolinse 40a, 40n zugeordnet und bildet so ein Mikrolinsen-Lochblenden-Paar, wobei die Lochblenden 42a, 42n jeweils einen Versatz 44a, 44n zu den ihnen zugeordneten Mikrolinsen 40a, 40n aufweisen, hier angegeben als Abstand der Mikrolinsenmittelpunkte von den Lochblendenmittelpunkten. Der Versatz 44a, 44n der Lochblenden 42a, 42n zu den ihnen zugeordneten Mikrolinsen 40a, 40n ist eine Funktion eines Abstandes der Mikrolinsen 40a, 40n vom Lichtsender 14, wobei der Versatz 44a, 44n in diesem Ausführungsbeispiel mit zunehmenden Abstand der Mikrolinsen 40a, 40n vom Lichtsender 14 abnimmt.

Dadurch schließen die durch die Mikrolinsenmittelpunkte und Blendenmittelpunkte definierten Geraden, entlang derer die Empfangslichtbündel 34a, 34b, 34c auf den Lichtempfänger 16 gelangen, einen größeren Winkel mit der Sendelichtachse 18 ein, je näher das Mikrolinsen-Lochblenden-Paar am Lichtsender 14 oder an der Sendelichtachse 18 angeordnet ist. Nahe am Lichtsender 14 oder an der Sendelichtachse 18 angeordnete Mikrolinsen-Lochblenden-Paare weisen also Sichtbereiche auf, die einen Nahbereich des Sensors 10 abdecken, weiter vom Lichtsender 14 oder der Sendelichtachse 18 entfernte Mikrolinsen-Lochblenden-Paare weisen Sichtbereiche auf, die einen Fernbereich des Sensors 10 abdecken. Der Sensor weist weiterhin eine Steuer- und Auswerteeinheit 50 zur Ansteuerung der Lichtquelle 24 und Auswertung eines durch den Lichtempfänger 16 erzeugten Empfangssignalmusters auf. Über eine Schnittstelle 52 können das Auswertungsergebnis und/oder die Empfangssignale des Lichtempfänger 16 selbst an eine übergeordnete Steuerung (nicht gezeigt) ausgegeben werden.

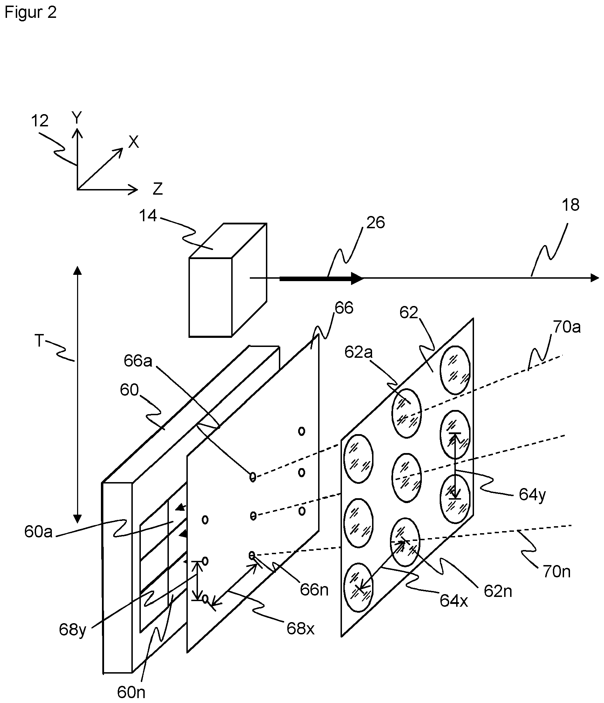

Häufig ist es einfacher, sich auf ein Koordinatensystem 12 zu beziehen. Daher soll im Folgenden ohne jede Einschränkung der Allgemeinheit die Y-Achse eine erste Richtung bezeichnen, die Lichtsender 14 und Lichtempfänger 16 verbindet und somit die Triangulationsrichtung T darstellt, in welcher ein Empfangslichtfleck auf dem Lichtempfänger 16 wandert. Die Z-Achse bezeichnet als zweite Richtung die Sendelichtachse 18 des Lichtsenders 14, entlang derer ein Sendelichtbündel 26 in den Überwachungsbereich 22 ausgesendet und ein Objektabstand 36a, 36b, 36c beziehungsweise eine Tastweite gemessen wird. Die X-Achse als verbleibende dritte Richtung steht senkrecht zur Y-Achse und zur Z-Achse
In Figur 2 ist ein zweidimensionaler Lichtempfänger60 mit rasterförmig angeordneten Empfangselementen 60a, 60n gezeigt. Dem Lichtempfänger 60 ist ein zweidimensionales Mikrolinsenraster 62 vorgeordnet, das eine Vielzahl von Mikrolinsen 62a, 62n mit Mikrolinsenmittelpunkten umfasst. Der Abstand von Mikrolinsenmittelpunkt zu Mikrolinsenmittelpunkt soll im Folgenden als Mikrolinsenrastermaß bezeichnet werden. Das Mikrolinsenraster 62 im Ausführungsbeispiel weist in X- und Y-Richtung unterschiedliche Mikrolinsenrastermaße 64y, 64x auf. Zwischen dem Lichtempfänger 60 und dem Mikrolinsenraster 62 ist ein Lochblenderaster 66 mit einer Vielzahl von Lochblenden 66a, 66n angeordnet, wobei jede Lochblende 66a, 66n einen Lochblendenmittelpunkt aufweist. Der Abstand von Lochblendenmittelpunkt zu Lochblendenmittelpunkt wird im Folgenden als Blendenrastermaß 68x, 68y bezeichnet, wobei das Blendenrastermaß 68x, 68y im Ausführungsbeispiel in X- und Y-Richtung unterschiedlich ist. Jeder Mikrolinse 62a, 62n des Mikrolinsenrasters 62 ist eine Lochblende 66a, 66n des Blendenrasters 66 zugeordnet und bildet so ein Mikrolinsen-Lochblenden-Paar. Mikrolinsenrastermaß 64x und Blendenrastermaß 68x sind in X-Richtung identisch und für jedes Mikrolinsen-Lochblenden-Paar stimmen die X-Koordinaten des Lochblendenmittelpunkts mit den X-Koordinaten des Mikrolinsenmittelpunkts überein. Da das Blendenrastermaß 68y in Y-Richtung kleiner ist als das Mikrolinsenrastermaß 64y, weisen die Mikrolinsenmittelpunkte und die Lochblendenmittelpunkte der Mikrolinsen-Lochblenden-Paare entlang der Y-Richtung, also der Triangulationsrichtung T, einen Versatz zueinander auf. Durch Mikrolinsenmittelpunkte und Blendenmittelpunkte definierte Geraden 70a, 70n schließen unterschiedliche Winkel mit der Z-Achse beziehungsweise der Sendelichtachse 18 ein. Dadurch variiert die Ausrichtung der Sichtbereiche der Mikrolinsen-Lochblenden-Paare in Y-Richtung abhängig vom Abstand vom Lichtsender 14, die Mikrolinsen-Lochblenden-Paare "schauen" somit auf unterschiedliche Bereiche entlang der Z-Achse beziehungsweise der Sendelichtachse 18.

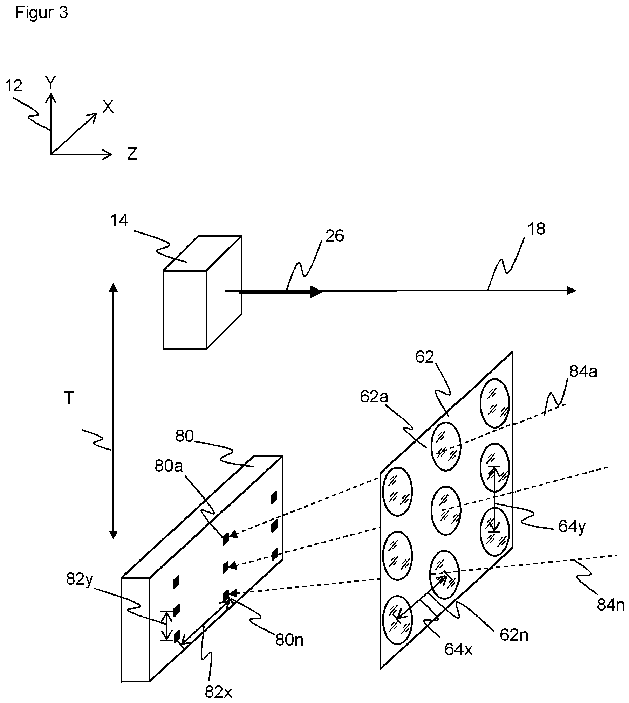

In Figur 3 ist ein zweidimensionaler Lichtempfänger 80 mit rasterförmig angeordneten Empfangselementen 80a, 80n gezeigt. Dem Lichtempfänger 80 ist wie im Ausführungsbeispiel aus Figur 2 ein zweidimensionales Mikrolinsenraster 62 vorgeordnet, das eine Vielzahl von Mikrolinsen 62a, 62n mit Mikrolinsenmittelpunkten umfasst, die in X- und Y-Richtung unterschiedliche Mikrolinsenrastermaße 64y, 64x aufweisen. Im Unterschied zu dem in Figur 2 gezeigten Ausführungsbeispiel wird das Lochblendenraster durch die Aperturen der Empfangselemente 80a, 80n gebildet, die kleinere Durchmesser als die Mikrolinsen 62a, 62n aufweisen, und ist somit integraler Bestandteil des Lichtempfängers 80. Jedem Empfangselement 80a, 80n des Lichtempfängers 80 ist eine Mikrolinse 62a, 62n zugeordnet und bildet so ein Mikrolinsen-Empfänger-Paar. Der Abstand der Mittelpunkte der Empfangselemente 80a, 80n, im Folgenden als Empfängerrastermaß 82x, 82y bezeichnet, ist wie im in Figur 2 gezeigten Ausführungsbeispiel in X-Richtung identisch zum Mikrolinsenrastermaß 64x und in Y-Richtung kleiner als das Mikrolinsenrastermaß 64y. Dadurch weisen die Mikrolinsenmittelpunkte und die Mittelpunkte der Empfangselemente 80a, 80n der Mikrolinsen-Empfänger-Paare entlang der Y-Richtung, also der Triangulationsrichtung T, einen Versatz zueinander auf. Durch Mikrolinsenmittelpunkte und Mittelpunkte der Empfangselemente 80a, 80n definierte Geraden 84a, 84n schließen unterschiedliche Winkel mit der Z-Achse beziehungsweise der Sendelichtachse 18 ein. Dadurch variiert die Ausrichtung der Sichtbereiche der Mikrolinsen-Empfänger-Paare in Y-Richtung abhängig vom Abstand vom Lichtsender 14, die Mikrolinsen- Empfänger-Paare "schauen" somit auf unterschiedliche Bereiche entlang der Z-Achse beziehungsweise der Sendelichtachse 18.

Die in den Figuren 2 und 3 gezeigten Beispiele zweidimensionaler Lichtempfänger-Mikrolinsen-Anordnungen können analog auch eindimensional mit einem eindimensionalen Lichtempfänger, beispielsweise einer CCD-Zeile oder einem eindimensionales Photodiodenarray, und einer Mikrolinsenzeile ausgeführt sein.

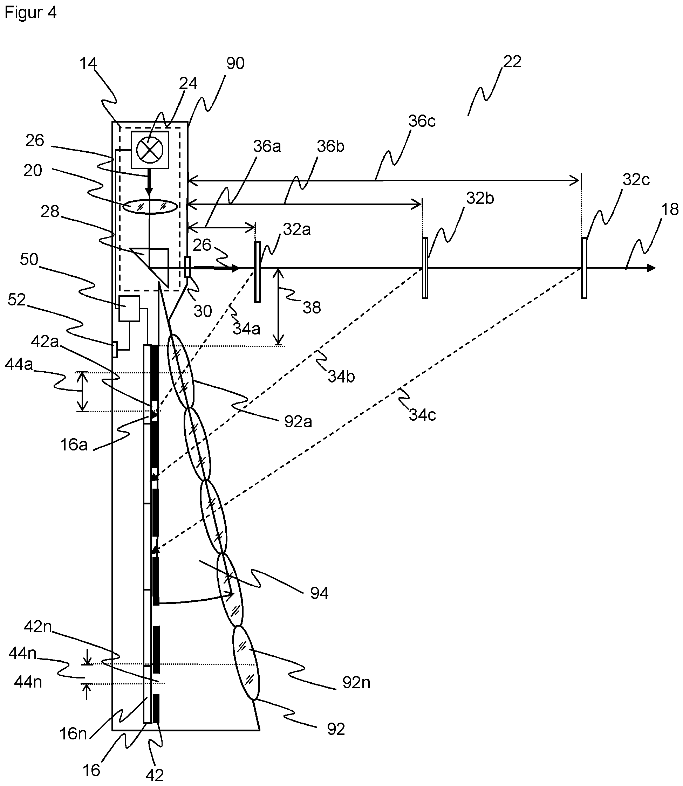

Figur 4 zeigt eine weitere Ausführungsform eines erfindungsgemäßen Sensors 90. Der Sensor 90 entspricht im Wesentlichen dem in Figur 1 gezeigten Sensor 10, gleiche Bezugszeichen bezeichnen gleiche Elemente. Im Gegensatz zu dem in Figur 1 gezeigten Sensor 10 weist der in der Figur 4 gezeigte Sensor 90 ein Mikrolinsenraster 92 mit einer Vielzahl von Mikrolinsen 92a, 92n auf, wobei das Mikrolinsenraster 92 gemäß der Scheimpflug Bedingung unter einem Winkel 94 zum Blendenaster 42 beziehungsweise zum Lichtempfänger 16 angeordnet ist. Dadurch werden von den Objekten 32a, 32b, 32c im Überwachungsbereich 22 remittierte Empfangslichtbündel 34a, 34b, 34c entsprechend ihres Objektabstands 36a, 36b, 36c vom Sensor 90 scharf auf das Blendenraster 42 beziehungsweise den Lichtempfänger 16 abgebildet.

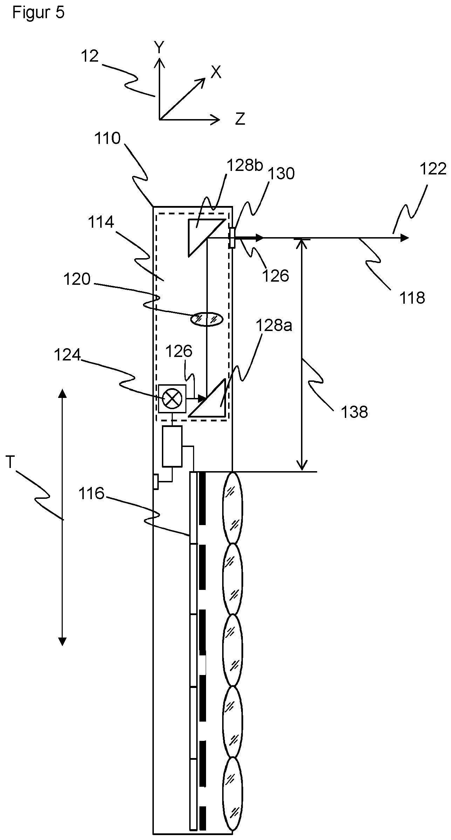

Figur 5 zeigt eine schematische Darstellung einer Ausführungsform eines erfindungsgemäßen Sensors 110 mit einem Lichtsender 114 der einen zweifach gefalteten Strahlengang aufweist. Die Lichtquelle 124 des Lichtsenders 114 emittiert das Sendelichtbündel 126 zunächst in Richtung des Überwachungsbereichs also in Z-Richtung. Das Sendelichtbündel wird dann von einem ersten Umlenkelement 128a in die X-Y Ebene, beispielsweise entlang der Y-Achse, abgelenkt und nach Durchlaufen einer Sendeoptik 120 des Sendelichtbündels 126 von einem zweiten Umlenkelement 128b wieder in Z-Richtung durch ein Fenster 130 entlang der Sendeachse 118 in den Überwachungsbereich 122 abgebildet. Dadurch kann zum einen wie im Ausführungsbeispiel in Figur 1 eine Kollimation des Sendelichtbündels 126 in der X-Y-Ebene erfolgen und der Platzbedarf des Lichtsenders 114 in Z-Richtung und somit die Bautiefe des Sensors 110 minimiert werden. Zum anderen können Lichtquelle 126 und Lichtempfänger 116 auch auf der gleichen Ebene, beispielsweise auf derselben Leiterplatte (nicht gezeigt) angeordnet sein. Durch die teileweise Strahlführung des Sendelichts 126 entlang der Y-Achse kann der Abstand 138 zwischen Sendelichtachse 118 und Lichtempfänger 116 bei gleichbleibender Bautiefe vergrößert werden, wodurch ein stärkerer Triangulationseffekt erzeugt wird. Die Umlenkelemente 128a, 128b können auch als strahlformende Spiegel ausgeführt sein, so dass auf eine zusätzliche Sendeoptik 120 zur Kollimation des Sendelichtbündels 126 verzichtet werden kann

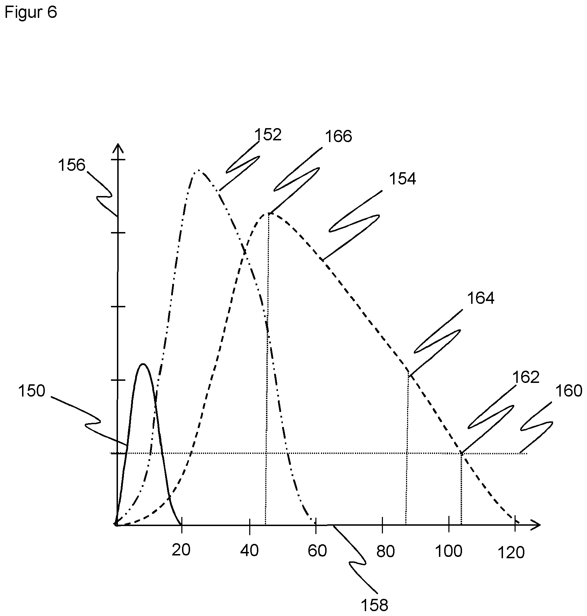

Figur 6 zeigt beispielhafte Empfangssignalmuster 150, 152, 154 eines erfindungsgemäßen Sensors für verschiedene Objektentfernungen, wobei auf der Ordinate 156 die Signalstärke und auf der Abszisse 158 die Pixelpositionen des Lichtempfängers angegeben sind. Der Lichtempfänger wird dabei derart ausgelesen, dass Signale von Pixeln mit niedriger Ordnungsnummer, also auf der linken Seite der Abszisse 158, Objekte aus dem Fernbereich des Sensors repräsentieren und Signale von Pixeln mit höherer Ordnungsnummer, also auf der rechten Seite der Abszisse 158, Objekte aus dem Nahbereich des Sensors. Dementsprechend repräsentiert das durch die die durchgezogene Linie 150 dargestellte Empfangssignalmuster 150 ein Objekt im Fernbereich, beispielsweise das Objekt 32c aus den Figuren 1 oder 4, das durch die strichpunktierte Linie dargestellte Empfangssignalmuster 152 ein Objekt in einem mittleren Entfernungsbereich, beispielsweise das Objekt 32b aus den Figuren 1 oder4, und das durch die gestrichelte Linie dargestellte Empfangssignalmuster 154 ein Objekt im Nahbereich des Sensors, beispielsweise das Objekt 32a aus den Figuren 1 oder 4.

Die Auswertung der Empfangssignalmuster kann auf unterschiedliche Weise erfolgen, wie beispielhaft am Empfangssignalmuster 154 für ein Objekt im Nahbereich erläutert wird. In einer ersten Variante wird eine Schaltschwelle 160 definiert, wobei ein Überschreiten der Schaltschwelle einen Schaltpunkt 162 angibt, der den Abstand des Objekts vom Sensor repräsentiert. Die Auswertung der Pixelsignale erfolgt dabei beginnend vom Pixel mit der höchsten Ordnungszahl, also von der rechten Seite der Abszisse 158 aus. Alternativ kann als Schaltpunkt der Wendepunkt 164 in der rechten Flanke des Empfangssignalmusters 154 gewählt werden, oder als weitere Alternative das Maximum des Empfangssignalmusters 154. Dertatsächliche Objektabstand kann dann mit dem Schaltpunkt beispielsweise in der Produktion oder nach Installation des Sensors eingelernt werden.

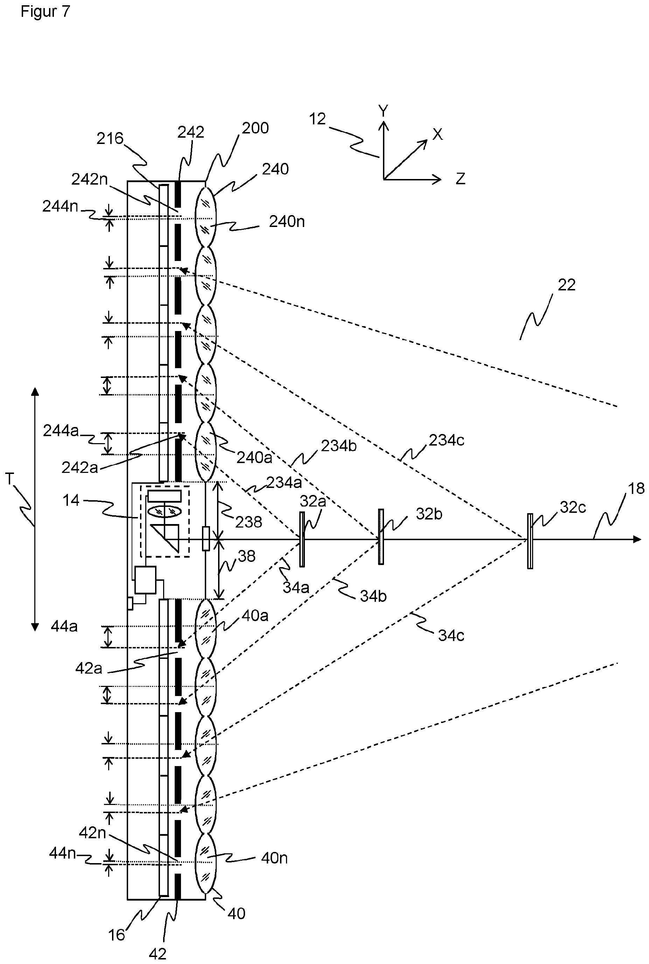

In Figur 7 ist eine weitere Ausführungsform eines erfindungsgemäßen Sensors 200 gezeigt, bei der auf der dem Lichtempfänger 16 in Triangulationsrichtung T gegenüberliegenden Seite des Lichtsenders 14 ein zweiter Lichtempfänger 216 angeordnet ist.

Der Lichtempfänger 16 und der zweite Lichtempfänger 216 sind in jeweils Triangulationsrichtung T um einen Basisabstand 38, 238 zur Sendelichtachse 18 beabstandet.

Dem zweiten Lichtempfänger 216 ist wie dem Lichtempfänger 16 ein zweites Mikrolinsenraster 240 vorgeordnet, das eine Vielzahl von zweiten Mikrolinsen 240a, 240n aufweist. Von den Objekten 32a, 32b, 32c im Überwachungsbereich 22 ausgehende zweite Empfangslichtbündel 234a, 234b, 234c werden durch das zweite Mikrolinsenraster 240 in einen Bereich des zweiten Lichtempfängers 216 fokussiert.

Im lichtempfängerseitigen Fokusbereich des zweiten Mikrolinsenrasters 240 ist ein zweites Blendenraster 242 angeordnet, das eine Vielzahl von zweiten Lochblenden 242a, 242n umfasst. Jeder zweiten Lochblende 242a, 242n des zweiten Lichtempfängers 216 ist eine zweite Mikrolinse 240a, 240n zugeordnet und bildet so ein zweites Mikrolinsen-Lochblenden-Paar, wobei die zweiten Lochblenden 242a, 242n jeweils einen zweiten Versatz 244a, 244n zu den ihnen zugeordneten zweiten Mikrolinsen 240a, 40n aufweisen, hier angegeben als Abstand der zweiten Mikrolinsenmittelpunkte von den zweiten Lochblendenmittelpunkten. Der zweite Versatz 244a, 244n der zweiten Lochblenden 242a, 242n zu den ihnen zugeordneten zweiten Mikrolinsen 240a, 240n ist eine Funktion eines Abstandes der Mikrolinse 240a, 240n vom Lichtsender 14 beziehungsweise der Sendelichtachse 18, wobei der zweite Versatz 244a, 244n in diesem Ausführungsbeispiel mit zunehmenden Abstand der zweiten Mikrolinsen 40a, 40n vom Lichtsender 14 beziehungsweise von der Sendelichtachse 18 abnimmt.

Dadurch schließen die durch die zweiten Mikrolinsenmittelpunkte und zweiten Blendenmittelpunkte definierten Geraden, entlang derer die zweiten Empfangslichtbündel 234a, 234b, 234c auf den zweiten Lichtempfänger 216 gelangen, einen größeren Winkel mit der Sendelichtachse 18 ein, je näher das zweite Mikrolinsen-Lochblenden-Paar am Lichtsender 14 oder Sendelichtachse 18 angeordnet ist. Nahe am Lichtsender 14 oder an der Sendelichtachse 18 angeordnete zweite Mikrolinsen-Lochblenden-Paare weisen also Sichtbereiche auf, die einen Nahbereich des Sensors 200 abdecken, weiter vom Lichtsender entfernte Mikrolinsen-Lochblenden-Paare weisen Sichtbereiche auf, die einen Fernbereich des Sensors 200 abdecken.

Der Lichtsender 16 und der zweite Lichtsender 216 können somit Empfangslichtbündel 34a, 34b, 34c beziehungsweise zweite Empfangslichtbündel 234a, 234b, 234c empfangen, die unter jeweils entgegengesetzten Winkeln bezüglich der Sendelichtachse 18 von Objekten 32a, 32b, 32c im Überwachungsbereich abgestrahlt werden. Dies hat Vorteile bei glänzenden Objekten, da auch durch gerichtete Reflexion des Sendelichtbündels 26 erzeugte Empfangslichtbündel 34a, 34b, 34c beziehungsweise zweite Empfangslichtbündel 234a, 234b, 234c auf wenigstens einen der Lichtempfänger 16, 216 gelangen können.

## Patentansprüche

1. Optoelektronischer Sensor (10, 90, 110, 200) nach dem Prinzip der Triangulation zur Erfassung eines Objekts (32a, 32b, 32c) in einem Überwachungsbereich (22) mit wenigstens einem Lichtsender (14) ortsauflösenden Lichtempfänger (16, 60, 80, 116) zum Empfangen eines aus von dem Objekt (32a, 32b, 32c) remittierten und/oder reflektierten Sendelichtbündel (26) entstandenen Empfangslichtbündels (34a, 34b, 34c), welches einen Empfangslichtfleck auf dem Lichtempfänger (16, 116) erzeugt, wobei dem Lichtempfänger (16, 116) ein Mikrolinsenraster (40) vorgeordnet ist, das eine Vielzahl von Mikrolinsen (40a, 40n) zum Fokussieren des Empfangslichtbündels (34a, 34b, 34c) in einen Bereich des Lichtempfängers (16, 116) umfasst, wobei zwischen dem Lichtempfänger (16, 60, 80, 116) und dem Mikrolinsenraster (40) ein eine Vielzahl von Lochblenden (42a, 42n) umfassendes Blendenraster (42) angeordnet ist, wobei jeder Mikrolinse (40a, 40n) eine Lochblende (42a, 42n) mit einem Lochblendendurchmesser zugeordnet ist, der kleiner ist als ein Mikrolinsendurchmesser der der Lochblende (42a, 42n) zugeordneten Mikrolinse (40a, 40n), und die Lochblenden (42a, 42n) zu den ihnen zugeordneten Mikrolinsen (40a, 40n) einen Versatz (44a, 44n) in Triangulationsrichtung (T) aufweisen,
**dadurch gekennzeichnet, dass**
der Lichtsender (14) zum Aussenden eines Sendelichtbündels (26) entlang einer Sendelichtachse (18, 118) in den Überwachungsbereich (22) ausgeprägt ist, der Lichtempfänger in einer Triangulationsrichtung (T) um einen Basisabstand (38, 138) gegen die Sendelichtachse (18, 118) versetzt angeordnet ist, und die Position des Empfangslichtflecks auf dem Lichtempfänger (16, 60, 80, 116) ein Maß für einen Abstand (36a, 36b, 36c) des Objekts (32a, 32b, 32c) vom Sensor (10, 90, 110, 200) ist.

2. Optoelektronischer Sensor (10, 90, 110, 200) nach Anspruch 1 **dadurch gekennzeichnet, dass** der Versatz (44a, 44n) eine Funktion eines Abstands der Mikrolinsen (40a, 40n) von der Sendelichtachse (18, 118) ist.

3. Optoelektronischer Sensor (10, 90, 110, 200) nach Anspruch 2, **dadurch gekennzeichnet, dass** die Funktion eine lineare Funktion ist.

4. Optoelektronischer Sensor (10, 90, 110, 200) nach Anspruch 2, **dadurch gekennzeichnet, dass** die Funktion eine nichtlineare Funktion ist.

5. Optoelektronischer Sensor (10, 90, 110, 200) nach einem der vorhergehenden Ansprüche, **dadurch gekennzeichnet, dass** der Versatz (44a, 44n) mit zunehmendem Abstand der Mikrolinsen (40a, 40n) von der Sendelichtachse (18, 118) abnimmt.

6. Optoelektronischer Sensor (10, 90, 110, 200) nach einem der Ansprüche 1 bis 4, **dadurch gekennzeichnet, dass** der Versatz (44a, 44n) mit zunehmendem Abstand der Mikrolinsen (40a, 40n) von der Sendelichtachse (18, 118) zunimmt.

7. Optoelektronischer Sensor (10, 90, 110, 200) nach einem der vorhergehenden Ansprüche, **dadurch gekennzeichnet, dass** der Lochblendendurchmesser eine Funktion des Abstands der Lochblende (42a, 42n) von der Sendelichtachse (18, 118) ist.

8. Optoelektronischer Sensor (10, 90, 110, 200) nach einem der ᵥorhergehenden Ansprüche, **dadurch gekennzeichnet, dass** das Blendenraster (42) an der dem Lichtempfänger (16) zugewandten Seite des Mikrolinsenrasters (40) angeordnet ist.

9. Optoelektronischer Sensor (10, 90, 110, 200) nach einem der Ansprüche 1 bis 7, **dadurch gekennzeichnet, dass** das Blendenraster (42) am Lichtempfänger (16, 116) angeordnet ist.

10. Optoelektronischer Sensor (10, 90, 110, 200) nach einem der Ansprüche 1 bis 7, **dadurch gekennzeichnet, dass** der Lichtempfänger (80) eine Vielzahl von Empfangselementen (80a, 80n) aufweist, und die Lochblenden durch Aperturen der Empfangselemente (80a, 80n) gebildet sind.

11. Optoelektronischer Sensor (10, 90, 110, 200) nach einem der vorhergehenden Ansprüche, **dadurch gekennzeichnet, dass** der Lichtsender (14, 114) wenigstens ein Umlenkmittel (28, 128a, 128b) zum Umlenken des Sendelichtbündels (26, 126) aufweist.

12. Optoelektronischer Sensor (110) nach einem der vorhergehenden Ansprüche, **dadurch gekennzeichnet, dass** der Lichtsender (114) ein erstes Umlenkmittel (128a) zum Umlenken des Sendelichtbündels (126) in Triangulationsrichtung (T) und ein zweites Umlenkmittel (128b) zum Umlenken des Sendelichtbündels (126) aus der Triangulationsrichtung (T) in den Überwachungsbereich (122) aufweist.

13. Optoelektronischer Sensor (90) nach einem der vorhergehenden Ansprüche, **dadurch gekennzeichnet, dass** das Mikrolinsenraster (92) und der Lichtempfänger (42) gemäß der Scheimpflug-Regel angeordnet sind.

14. Optoelektronischer Sensor (200) nach einem der vorhergehenden Ansprüche, **dadurch gekennzeichnet, dass** der Sensor (200) einen zweiten ortsauflösenden Lichtempfänger (216) zum Empfangen eines von dem Objekt (32a, 32b, 32c) remittierten und/oder reflektierten zweiten Empfangslichtbündels (234a, 234b, 234c) aufweist, wobei der zweite ortsauflösende Lichtempfänger (216) auf der dem ortsauflösendem Lichtempfänger (16) in Triangulationsrichtung (T) gegenüberliegenden Seite des Lichtsenders (14) und um einen zweiten Basisabstand (238) gegen die Sendelichtachse (18) versetzt angeordnet ist, wobei dem zweiten Lichtempfänger (216) ein zweites Mikrolinsenraster (240) vorgeordnet ist, das eine Vielzahl von zweiten Mikrolinsen (240a, 240n) zum Fokussieren des zweiten Empfangslichtbündels (234a, 234b, 234c) in einen Bereich des zweiten Lichtempfängers (216) umfasst, wobei zwischen dem zweiten Lichtempfänger (216) und dem zweiten Mikrolinsenraster (240) ein eine Vielzahl von zweiten Lochblenden (242a, 242n) umfassendes zweites Blendenraster (242) angeordnet ist, wobei jeder zweiten Mikrolinse (240a, 240n) eine zweite Lochblende (242a, 242n) mit einem zweiten Lochblendendurchmesser zugeordnet ist, der kleiner ist als ein zweiter Mikrolinsendurchmesser der der zweiten Lochblende (242a, 242n) zugeordneten zweiten Mikrolinse (240a, 240n), und die zweiten Lochblenden (242a, 242n) zu den ihnen zugeordneten zweiten Mikrolinsen (240a, 240n) einen zweiten Versatz (244a, 244n) in Triangulationsrichtung (T) aufweisen.

15. Optoelektronischer Sensor (10, 90, 110, 200) nach einem der vorhergehenden Ansprüche, **dadurch gekennzeichnet, dass** der Sensor (10, 90, 110, 200) eine Steuer- und Auswerteeinheit (50) zur Auswertung eines durch den Lichtempfänger (16, 60, 80, 116) erzeugten Empfangssignalmusters (150, 152, 154) aufweist.

## Claims

1. An optoelectronic sensor (10, 90, 110, 200) in accordance with the principle of triangulation for the detection of an object (32a, 32b, 32c) in a monitored zone (22) having at least one light transmitter (14) and at least one spatially resolving light receiver (16, 60, 80, 116) for receiving a received beam of light (34a, 34b, 34c) that is produced from a transmitted beam of light (26) remitted and/or reflected by the object (32a, 32b, 32c) and that generates a received light spot on the light receiver (16, 116), wherein a microlens array (40) is arranged upstream of the light receiver (16, 116) and comprises a plurality of microlenses (40a, 40n) for focusing the received beam of light (34a, 34b, 34c) into a zone of the light receiver (16, 116);
wherein an aperture grid (42) comprising a plurality of pinhole apertures (42a, 42n) is arranged between the light receiver (16, 60, 80, 116) and the microlens array (40); wherein a pinhole aperture (42a, 42n) having a pinhole aperture diameter that is smaller than a microlens diameter of the microlens (40a, 40n) associated with the pinhole aperture (42a, 42n) is associated with each microlens (40a, 40n) and wherein the pinhole apertures (42a, 42n) have an offset (44a, 44n) from the microlenses (40a, 40n) associated with them in the triangulation direction (T),
**characterized in that**
the light transmitter (14) is adapted to transmit a transmitted beam of light (26) into the monitored zone (22) along a transmitted light axis (18, 118);
**in that** the light receiver is arranged offset by a base distance (38, 138) against the transmitted light axis (18, 118) in a triangulation direction (T); and
**in that** the position of the received light spot on the light receiver (16, 60, 80, 116) is a measure for a distance (36a, 36b, 36c) of the object (32a, 32b, 32c) from the sensor (10, 90, 110, 200).

2. An optoelectronic sensor (10, 90, 110, 200) in accordance with claim 1, **characterized in that** the offset (44a, 44n) is a function of a distance of the microlenses (40a, 40n) from the transmitted light axis (18, 118).

3. An optoelectronic sensor (10, 90, 110, 200) in accordance with claim 2, **characterized in that** the function is a linear function.

4. An optoelectronic sensor (10, 90, 110, 200) in accordance with claim 2, **characterized in that** the function is a nonlinear function.

5. An optoelectronic sensor (10, 90, 110, 200) in accordance with any one of the preceding claims, **characterized in that** the offset (44a, 44n) decreases as the distance of the microlenses (40a, 40n) from the transmitted light axis (18, 118) increases.

6. An optoelectronic sensor (10, 90.110, 200) in accordance with any one of the claims 1 to 4, **characterized in that** the offset (44a, 44n) increases as the distance of the microlenses (40a, 40n) from the transmitted light axis (18, 118) increases.

7. An optoelectronic sensor (10, 90, 110, 200) in accordance with any one of the preceding claims, **characterized in that** the pinhole aperture diameter is a function of the distance of the pinhole aperture (42a, 42n) from the transmitted light axis (18, 118).

8. An optoelectronic sensor (10, 90, 110. 200) in accordance with any one of the preceding claims, **characterized in that** the aperture grid (42) is arranged on the side of the microlens array (40) facing the light receiver (16).

9. An optoelectronic sensor (10, 90, 110, 200) in accordance with any one of the claims 1 to 7, **characterized in that** the aperture grid (42) is arranged at the light receiver (16, 116).

10. An optoelectronic sensor (10, 90, 110, 200) in accordance with any one of the claims 1 to 7, **characterized in that** the light receiver (80) has a plurality of reception elements (80a, 80n) and the pinhole apertures are formed by apertures of the reception elements (80a, 80n).

11. An optoelectronic sensor (10, 90, 110, 200) in accordance with any one of the preceding claims, **characterized in that** the light transmitter (14, 114) has at least one deflection means (28, 128a, 128b) for deflecting the transmitted beam of light (26, 126).

12. An optoelectronic sensor (10, 90, 110, 200) in accordance with any one of the preceding claims, **characterized in that** the light transmitter (114) has a first deflection means (28a) for deflecting the transmitted beam of light (126) in the triangulation direction (T) and a second deflection means (128b) for deflecting the transmitted beam of light (126 from the triangulation direction (T) into the monitored zone (122).

13. An optoelectronic sensor (90) in accordance with any one of the preceding claims, **characterized in that** the microlens array (92) and the light receiver (42) are arranged in accordance with the Scheimpflug principle.

14. An optoelectronic sensor (10, 90, 110, 200) in accordance with any one of the preceding claims, **characterized in that** the sensor (200) has a second spatially resolving light receiver (216) for receiving a second received beam of light (234a, 234b, 234c) remitted and/or reflected by the object (32a, 32b, 32c), with the second spatially resolving light receiver (216) being arranged on the side of the light transmitter (14) disposed opposite the spatially resolving light receiver (16) in the triangulation direction (T) and offset by a second base distance (238) against the transmitted light axis (18), with a second microlens array (240) being arranged upstream of the second light receiver (216) and comprising a plurality of second microlenses (240a, 240n) for focusing the second received beam of light (234a, 234b, 234c) into a zone of the second light receiver (216), with a second aperture grid (242) comprising a plurality of second pinhole apertures (242a, 242n) being arranged between the second light receiver (216) and the second microlens array (240), with a second pinhole aperture (242a, 242n) having a second pinhole aperture diameter that is smaller than a second microlens diameter of the second microlens (240a, 240) associated with the second pinhole aperture (242a, 242n) being associated with each second microlens (240a, 240n), and with the second pinhole apertures (242a, 242n) having a second offset (244a, 244n) from the second microlenses (240a, 240n) associated with them in the triangulation direction (T).

15. An optoelectronic sensor (10, 90, 110, 200) in accordance with any one of the preceding claims, **characterized in that** the sensor (10, 90, 110, 200) having a control and evaluation unit (50) for evaluating a received signal pattern (150, 152, 154) generated by the light receiver (16, 60, 80, 116).

## Revendications

1. Capteur optoélectronique (10, 90, 110, 200) selon le principe de la triangulation pour la détection d'un objet (32a, 32b, 32c) dans une zone à surveiller (22), comprenant au moins un émetteur de lumière (14) et au moins un récepteur de lumière (16, 60, 80, 116) à résolution spatiale destiné à recevoir un faisceau lumineux de réception (34a, 34b, 34c) qui résulte du faisceau lumineux d'émission (26) renvoyé et/ou réfléchi par l'objet (32a, 32b, 32c) et qui produit un spot lumineux de réception sur le récepteur de lumière (16, 116), dans lequel un réseau de microlentilles (40) est disposé en amont du récepteur de lumière (16, 116), lequel comprend une pluralité de microlentilles (40a, 40n) pour focaliser le faisceau lumineux de réception (34a, 34b, 34c) dans une zone du récepteur de lumière (16, 116), un réseau de diaphragmes (42) comprenant une pluralité de diaphragmes à trou (42a, 42n) est disposé entre le récepteur de lumière (16, 60, 80, 116) et le réseau de microlentilles (40), à chaque microlentille (40a, 40n) est associé un diaphragme à trou (42a, 42n) ayant un diamètre de diaphragme à trou qui est inférieur à un diamètre de microlentille de la microlentille (40a, 40n) associée au diaphragme à trou (42a, 42n), et les diaphragmes à trou (42a, 42n) présentent un décalage (44a, 44n) par rapport aux microlentilles (40a, 40n), qui leur sont associées, dans la direction de triangulation (T),
**caractérisé en ce que**
l'émetteur de lumière (14) est configuré pour émettre un faisceau lumineux d'émission (26) le long d'un axe de lumière d'émission (18, 118) dans la zone à surveiller (22), le récepteur de lumière est disposé en étant décalé d'une distance de base (38, 138) par rapport à l'axe de lumière d'émission (18, 118) dans une direction de triangulation (T), et
la position du spot lumineux de réception sur le récepteur de lumière (16, 60, 80, 116) est un indice d'une distance (36a, 36b, 36c) de l'objet (32a, 32b, 32c) par rapport au capteur (10, 90, 110, 200).

2. Capteur optoélectronique (10, 90, 110, 200) selon la revendication 1, **caractérisé en ce que** le décalage (44a, 44n) est une fonction d'une distance des microlentilles (40a, 40n) par rapport à l'axe de lumière d'émission (18, 118).

3. Capteur optoélectronique (10, 90, 110, 200) selon la revendication 2, **caractérisé en ce que** la fonction est une fonction linéaire.

4. Capteur optoélectronique (10, 90, 110, 200) selon la revendication 2, **caractérisé en ce que** la fonction est une fonction non linéaire.

5. Capteur optoélectronique (10, 90, 110, 200) selon l'une des revendications précédentes, **caractérisé en ce que** le décalage (44a, 44n) diminue au fur et à mesure de l'augmentation de la distance des microlentilles (40a, 40n) par rapport à l'axe de lumière d'émission (18, 118).

6. Capteur optoélectronique (10, 90, 110, 200) selon l'une des revendications 1 à 4, **caractérisé en ce que** le décalage (44a, 44n) augmente au fur et à mesure de l'augmentation de la distance des microlentilles (40a, 40n) par rapport à l'axe de lumière d'émission (18, 118).

7. Capteur optoélectronique (10, 90, 110, 200) selon l'une des revendications précédentes, **caractérisé en ce que** le diamètre du diaphragme à trou est une fonction de la distance du diaphragme à trou (42a, 42n) par rapport à l'axe de lumière d'émission (18, 118).

8. Capteur optoélectronique (10, 90, 110, 200) selon l'une des revendications précédentes, **caractérisé en ce que** le réseau de diaphragmes (42) est disposé sur le côté du réseau de microlentilles (40) tourné vers le récepteur de lumière (16).

9. Capteur optoélectronique (10, 90, 110, 200) selon l'une des revendications 1 à 7, **caractérisé en ce que** le réseau de diaphragmes (42) est disposé sur le récepteur de lumière (16, 116).

10. Capteur optoélectronique (10, 90, 110, 200) selon l'une des revendications 1 à 7, **caractérisé en ce que** le récepteur de lumière (80) comporte une pluralité d'éléments de réception (80a, 80n), et les diaphragmes à trou sont formés par des ouvertures des éléments de réception (80a, 80n).

11. Capteur optoélectronique (10, 90, 110, 200) selon l'une des revendications précédentes, **caractérisé en ce que** l'émetteur de lumière (14, 114) comporte au moins un moyen de déviation (28, 128a, 128b) destiné à dévier le faisceau lumineux d'émission (26, 126).

12. Capteur optoélectronique (110) selon l'une des revendications précédentes, **caractérisé en ce que** l'émetteur de lumière (114) comporte un premier moyen de déviation (128a) destiné à dévier le faisceau lumineux d'émission (126) dans la direction de triangulation (T) et un deuxième moyen de déviation (128b) destiné à dévier le faisceau lumineux d'émission (126) de la direction de triangulation (T) vers la zone à surveiller (122).

13. Capteur optoélectronique (90) selon l'une des revendications précédentes, **caractérisé en ce que** le réseau de microlentilles (92) et le récepteur de lumière (42) sont disposés selon la loi de Scheimpflug.

14. Capteur optoélectronique (200) selon l'une des revendications précédentes, **caractérisé en ce que** le capteur (200) comprend un deuxième récepteur de lumière (216) à résolution spatiale destiné à recevoir un deuxième faisceau lumineux de réception (234a, 234b, 234c) renvoyé et/ou réfléchi par l'objet (32a, 32b, 32c), sachant que le deuxième récepteur de lumière (216) à résolution spatiale est disposé sur le côté de l'émetteur de lumière (14) opposé au récepteur de lumière (16) à résolution spatiale dans la direction de triangulation (T), et est décalé d'une deuxième distance de base (238) par rapport à l'axe de lumière d'émission (18), un deuxième réseau de microlentilles (240) est disposé en amont du deuxième récepteur de lumière (216), lequel comporte une pluralité de deuxièmes microlentilles (240a, 240n) pour focaliser le deuxième faisceau lumineux de réception (234a, 234b, 234c) dans une zone du deuxième récepteur de lumière (216), un deuxième réseau de diaphragmes (242) comprenant une pluralité de deuxièmes diaphragmes à trou (242a, 242n) est disposé entre le deuxième récepteur de lumière (216) et le deuxième réseau de microlentilles (240), à chaque deuxième microlentille (240a, 240n) est associé un deuxième diaphragme à trou (242a, 242n) ayant un deuxième diamètre de diaphragme à trou qui est inférieur à un deuxième diamètre de microlentille de la deuxième microlentille (240a, 240n) associée au deuxième diaphragme à trou (242a, 242n), et les deuxièmes diaphragmes à trou (242a, 242n) présentent un deuxième décalage (244a, 244n) par rapport aux deuxièmes microlentilles (240a, 240n), qui leur sont associées, dans la direction de triangulation (T).

15. Capteur optoélectronique (10, 90, 110, 200) selon l'une des revendications précédentes, **caractérisé en ce que** le capteur (10, 90, 110, 200) comprend une unité de commande et d'évaluation (50) destinée à évaluer un motif de signal de réception (150, 152, 154) produit par le récepteur de lumière (16, 60, 80, 116).
